# EUROPÄISCHE PATENTANMELDUNG

(11) **EP 0 569 605 A1**
(43) Veröffentlichungstag der Anmeldung: **18.11.1993**
(21) Anmeldenummer: 92107592.5
(22) Anmeldetag: 06.05.1992
(51) Int. Cl.: G06F 9/46

(54) **Verfahren zur Zugriffsverwaltung und -steuerung mehrerer Rechner auf gemeinsame Daten**

(71) Anmelder: International Business Machines Corporation, Armonk, N.Y. 10504 (US)
(72) Erfinder: Lenz, Norbert, Dr. Dipl. Math., W-7037 Magstadt (DE)
(74) Vertreter: Jost, Ottokarl, Dipl.-Ing.

(57) **Zusammenfassung**

Verfahren zur Zugriffsverwaltung und -steuerung mehrerer Rechner auf gemeinsame Daten mit einer Steuerdatei (3-1) ("Lock-File"). Die Steuerdatei enthält datenspezifische Steuerfelder (3-4) mit Zugriffsverwaltungsinformation ZVI. Dem Steuerfeld ist jeweils eine wahlfreie Adresse der Daten und ein Statuskennzeichnungscode SKC (3-3) zugeordnet, welcher Aussagen über den Änderungszustand des Steuerfeldes enthält.

Bei einer Zugriffsanforderung oder -freigabe durch einen Rechner auf Daten wird das entsprechende Steuerfeld für einen Schreibvorgang bezüglich der Zugriffsverwaltungsinformation des anfordernden Rechners adressiert. Der Schreibvorgang kann nur vollzogen werden, wenn der Wert des Statuskennzeichnungscodes entsprechend einer optimistischen Annahme einem erwarteten Wert entspricht. Nach vollzogenem Schreibvorgang wird der Statuskennzeichnungscode entsprechend abgeändert.

Bei diesem auf einer optimistischen Annahme beruhenden Verfahren entfällt mit hoher Wahrscheinlichkeit ein zeitaufwendiger Lesevorgang für die Zugriffsverwaltungsinformation in den anfordernden Rechner.

Ein Lesevorgang ist nur für die Fälle erforderlich, in denen die optimistische Annahme nicht zutrifft.

## Beschreibung

Die Erfindung bezieht sich auf ein verbessertes Verfahren zur Verwaltung und Steuerung des Zugriffs mehrerer Rechner auf gemeinsame Daten.

Üblicherweise ist beim Ablauf von Anwendungsprogrammen in Mehrrechnersystemen eine Steuerinformation dafür erforderlich, ob, und unter welchen Randbedingungen ein Rechner (unter mehreren) auf gemeinsame Daten (z. B. auf einen Datensatz) Zugriff nehmen kann, ihn lesen und/oder durch Schreibvorgänge verändern darf.

Bei Berechtigung eines bestimmten Rechners zum Lesen oder Schreiben eines solchen gemeinsamen Datensatzes muß anderen Rechnern in dieser Zeit (z. B. durch einen sogenannten Lock-Befehl bewirkt) der Zugriff auf diesen gemeinsamen Datensatz verwehrt bleiben; sobald der berechtigte Rechner seine Operation bezüglich des gemeinsamen Datensatzes ausgeführt hat, wird die Zugriffssperre (z. B. durch einen sogenannten Unlock-Befehl) zugunsten neuer Zugriffsanforderungen wieder aufgehoben.

Nach dem Stand der Technik ist für die Zugriffsvervaltung und -steuerung eine gemeinsame und separat adressierbare Tabelle oder Datei (im englischen Sprachgebrauch "Global Lock Table" oder im IBM VSE-Betriebssystem "Lock-File" genannt) vorgesehen.

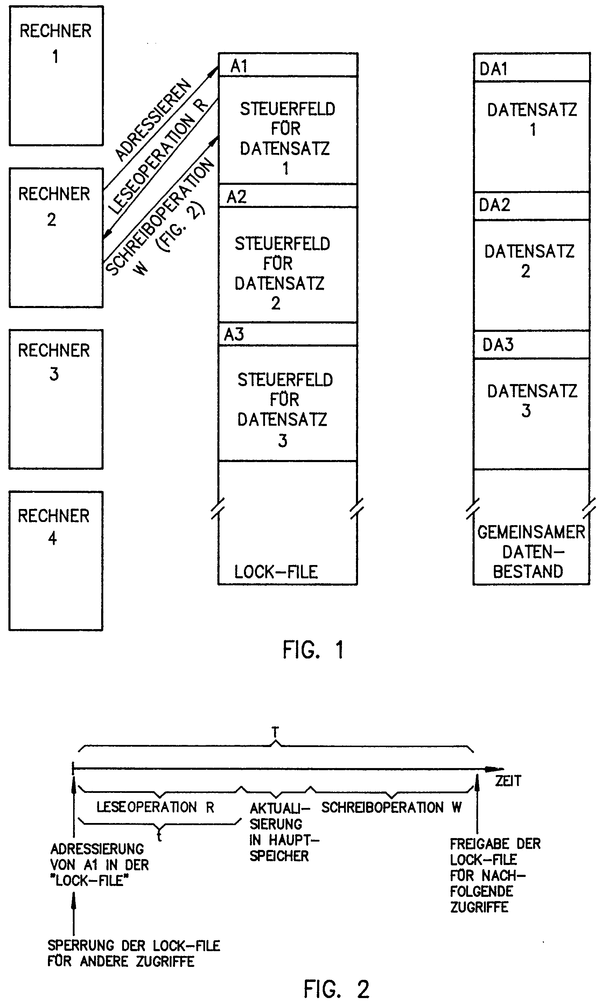

Für die gemeinsamen Daten, z. B. Datensätze, auf die zugegriffen werden soll, sind in der für Verwaltungs- und Steuerungszwecke angelegten "Lock-File" jeweils verschiedene Steuerfelder vorgesehen (Fig. 1). Jedes Steuerfeld enthält Angaben zur Zugriffsverwaltung und -steuerung für die jeweiligen Datensätze; jedem Steuerfeld ist ein Suchbegriff (z. B. A1, A2, A3) vorangestellt, der dem Suchbegriff (DA1, DA2, DA3) der jeweiligen gemeinsamen Daten (Datensatz 1, 2, 3) direkt zugeordnet (z. B. identisch) oder indirekt zugeordnet ist.

Sobald im Anwendungsprogramm eines Rechners (in Fig. 1 z. B. Rechner 2) ein bestimmter gemeinsamer Datensatz für einen Schreib- oder Lesevorgang (unter Vorgabe des Suchbegriffes z. B. A1) adressiert wird (Fig. 2), erfolgt zunächst mit dem Lock-Befehl unter Verwendung dieses Suchbegriffes die Adressierung des Steuerfeldes für diesen Datensatz 1. Dabei wird die "Lock-File" für nachfolgende, konkurrierende Zugriffe gesperrt (z. B. im IBM Betriebssystem VSE durch die Instruktion RESERVE DISK); im Anschluß daran wird die Information des adressierten Steuerfeldes in den Hauptspeicher des anfordernden Rechners gelesen (Leseoperation R) und überprüft, ob der Anforderung des Rechners Genüge getan werden kann:

Wenn ja, wird die Information des Steuerfeldes entsprechend der Anforderung (bzw. Freigabe) aktualisiert ("Update"- Operation) und in das entsprechende Steuerfeld der "Lock-File" zurückgeschrieben (Schreiboperation W). Die "Lock-File" wird anschließend für weitere Zugriffe freigegeben (z. B. im IBM Betriebssystem VSE durch die Instruktion RELEASE DISK).

Wenn der Anforderung des Rechners beim Lock-Befehl nicht Genüge getan werden kann, wird die "Lock-File" für weitere Zugriffe freigegeben und entweder mit einer entsprechenden Meldung ins Anwendungsprogramm zurückverzweigt, oder (nach einer Wartezeit) unter Vorgabe des Suchbegriffs eine erneute Anforderung auf die "Lock-File" durchgeführt.

Bei diesen Abläufen nimmt die Ausführung der Leseoperation R eine beträchtliche Zeit t, ca. 40 % bis fast 50 % der Gesamtzeit T für die in Fig. 2 wiedergegebenen Zeitabläufe in Anspruch. Es ist Aufgabe der Erfindung, die Zeit T zu verkürzen. Dies ist durch die erfindungsgemäß im kennzeichnenden Teil des Anspruches 1 angegebenen Maßnahmen möglich, wodurch die Zeit t zu einem Großteil eingespart wird.

Weitere Vorteile der Erfindung sind in den Unteransprüchen gekennzeichnet.

Der Stand der Technik und Ausführungsbeispiele der Erfindung sind in den Zeichnungen dargestellt und werden im folgenden näher beschrieben. Es Zeigen:
- Fig. 1: Eine schematische Darstellung eines Mehrrechnersystems mit einem gemeinsamen Datenbestand und einer "Lock-File" für Zugriffsverwaltungs- und Steuerungszwecke;
- Fig. 2: ein "Lock-File"-Zeitdiagramm nach dem Stand der Technik für eine Lese-, und Schreiboperation;
- Fig. 3: eine auszugsweise schematische Darstellung eines Mehrrechnersystems mit einer "Lock-File" für das erfindungsgemäße auf der optimistischen Annahme beruhende Verfahren zur Zugriffsverwaltung und -steuerung;
- Fig. 4, 4A, 4B: ein Funktionsablaufdiagramm zur Darstellung des nach der optimistischen Annahme arbeitenden Verfahrens unter Berücksichtigung der anwendungsprogramm- und betriebssystemseitig ablaufenden Vorgänge;
- Fig. 5: eine Darstellung einer Gruppe von Steuerfeldern mit einem gruppengemeinsamen Statuskennzeichnungscode;
- Fig. 6: ein schematisches Zeitdiagramm für den Zugriff zweier Rechner auf einen Datensatz.

Die Erfindung basiert auf einer sogenannten "optimistischen Annahme". Diese optimistische Annahme gründet sich auf der Feststellung, daß in vielen Anwendungen beim konkurrierenden Zugriff mehrerer Rechner auf Daten eines gemeinsamen Datenbestandes mit hoher (z. B. über 90 %iger) Wahrscheinlichkeit davon ausgegangen werden kann, daß der Inhalt des entsprechenden Steuerfeldes in der "Lock-File", nämlich die Angaben zur Zugriffsverwaltung und -steuerung, einen sofortigen Zugriff des Rechners auf die gemeinsamen Daten (z. B. einen Datensatz) zuläßt. Bei Freigabe der Zugriffsrechte kann mit hoher Wahrscheinlichkeit davon ausgegangen werden, daS der Inhalt des entsprechenden Steuerfeldes seit dem vorausgehenden Eintrag der Zugriffsrechte noch nicht durch andere Einträge verändert wurde.

Im Zusammenhang mit dieser hohen Wahrscheinlichkeit wird hier von einer "optimistischen Annahme" gesprochen. Dabei wird davon ausgegangen, daß mit hoher Wahrscheinlichkeit das entsprechende Steuerfeld der "Lock-File" den erwarteten Inhalt besitzt. Fälle, in denen dies nicht zutrifft, werden als Ausnahme geregelt.

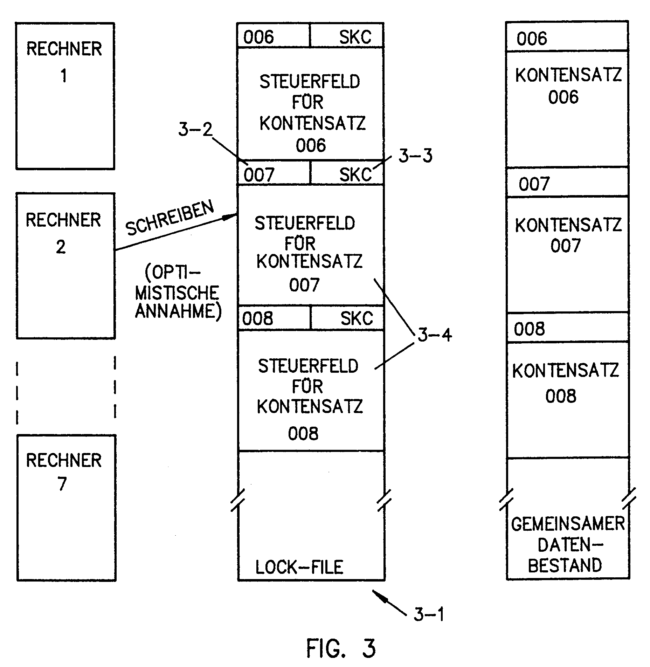

Zur schnellen Überprüfung der optimistischen Annahme ist jedem Steuerfeld in der "Lock-File" ein Statuskennzeichnungscode SKC zugeordnet (siehe Fig. 3).

Angenommen, in einem Anwendungsprogramm eines Rechners 2 (von 7) wird ein Lesebefehl für einen Kontensatz mit dem Ordnungsbegriff Kontonummer 007 gegeben. Durch Vorgabe des Suchbegriffs "007" wird beim Abarbeiten des Lock-Befehls der Abschnitt der "Lock-File" für eine Schreiboperation adressiert, in dem das Steuerfeld für den Kontensatz 007 enthalten ist; diesem Steuerfeld sind neben dem Ordnungsbegriff 007 der Statuskennzeichnungscode SKC für dieses Steuerfeld zugeordnet. Durch eine Schreiboperation soll in das Steuerfeld eine Zugriffsverwaltungsinformation gestellt werden z. B. "exklusives Zugriffsrecht des Rechners 2 auf den Kontensatz mit der Kontonummer 007".

Durch die optimistische Annahme wird davon ausgegangen, daß die Information sofort in das Steuerfeld geschrieben werden kann. Dies wäre der Fall, wenn
a) im Steuerfeld überhaupt noch keine Information enthalten ist oder
b) die Information des Steuerfeldes ein Überschreiben zuläßt.

Diese Möglichkeiten spiegeln sich jedoch im Statuskennzeichnungscode SKC in verschlüsselter Form wider.

Dadurch ist es möglich, durch Vergleich des tatsächlichen Inhalts des dem Steuerfeld zugeordneten Statuskennzeichnungscodes mit seinem erwarteten Inhalt während der Schreiboperation festzustellen, ob die anstehende auf das Steuerfeld anzuwendende Schreiboperation ausgeführt werden kann, ohne daß vorher der Inhalt des Steuerfeldes in den Speicher des anfordernden Rechners gelesen werden muß.

Viele Datenträgereinheiten (Geräte), die die "Lock-File" enthalten, wie z. B. sogenannte "Count-Key-Data-Platten" (siehe "IBM 3390 Storage Control Reference", IBM Handbuch GA 32-099) oder andere schnelle, z. B. auf Halbleitertechnologie basierende Geräte, die externen Speicherplatz zur Verfügung stellen, lassen es zu, die Ausführung einer Schreiboperation (hier in ein Steuerfeld der "Lock-File") an eine Bedingung zu knüpfen. Bei "Count-Key-Data"-Platten kann dies z. B. im Kanalprogramm durch ein "Search Key" und "Transfer in Channel"-Kommando erzielt werden. Im vorliegenden Fall wird zunächst der Statuskennzeichnungscode SKC darauf geprüft, ob eine Schreiboperation für eine bestimmte Anforderung ins Steuerfeld zulässig ist. Diese Prüfung erfolgt durch Vergleich des erwarteten Inhalts des SKC-Codes mit seinem tatsächlichen Inhalt. Diese Prüfung erfordert nicht das zeitaufwendige Einlesen des SKC in den Hauptspeicher des Rechners 2, sondern wird, wie bereits erwähnt, z. B. durch ein entsprechendes Kanalprogramm oder andere geeignete Maßnahmen so durchgeführt, daß eine zeitaufwendige Leseoperation R (wie in Fig. 2) nicht anfällt.

Wird durch Prüfung des Statuskennzeichnungscodes SKC festgestellt, daß der Schreibvorgang ins Steuerfeld für den Kontensatz 007 ausgeführt werden kann, so wird dieser Schreibvorgang vollzogen und der Statuskennzeichnungscode SKC entsprechend der Schreibanforderung neu gesetzt. So wird z. B. geprüft, ob SKC = 0 ist (gleichbedeutend mit: das Steuerfeld enthält keine Zugriffsverwaltungsinformation, d. h. es sind noch keine Zugriffsrechte vergeben); falls ja, wird die Anforderung ins Steuerfeld geschrieben und SKC = 1 gesetzt (dies beinhaltet: das Steuerfeld enthält nun Zugriffsverwaltungsinformation, d. h. es sind Zugriffsrechte vergeben).

Angenommen, das Anwendungsprogramm des Rechners 2 hätte anschließend die Bearbeitung des Kontensatzes 007 abgeschlossen, so würde es seine Zugriffsrechte auf diesem Kontensatz zurückgeben: Durch Vorgabe von "007" wird beim Unlock-Befehl der Abschnitt der "Lock-File" für eine Schreiboperation adressiert, in dem das Steuerfeld für den Kontensatz 007 enthalten ist. Die optimistische Annahme beruht nun darauf, daß das Steuerfeld zwischenzeitlich nicht verändert wurde. Dies kann dadurch überprüft werden, daß beim Schreibvorgang für den Unlock-Befehl in das Steuerfeld überprüft wird, ob SKC noch den erwarteten Wert - hier z. B. SKC = 1 - hat. Falls ja, kann der Schreibvorgang für den Unlock-Befehl ausgeführt werden (dieser Vorgang wird dann ohne Einlesen von Information aus der "Lock-File" in den Rechner 2 abgeschlossen; falls nein, muß eine Ausnahmebehandlung erfolgen.

(Diese könnte geboten sein, wenn SKC in der Zwischenzeit auf einen anderen Wert, z. B. SKC = 2 gesetzt wurde, weil z. B. der Kontensatz 007 von einem anderen Rechner zwischenzeitlich ebenfalls gelesen wird oder wurde.)

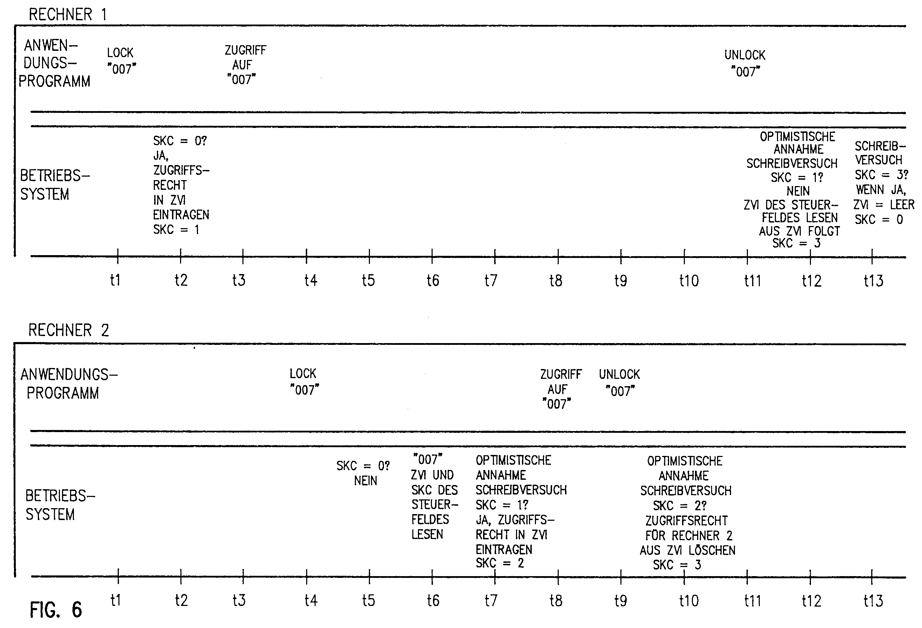

Auf diese Art und Weise wird gemäß der optimistischen Annahme insbesondere der zeitaufwendige Lesevorgang für den Inhalt des Steuerfeldes in den Hauptspeicher wie beim Stand der Technik üblich, eingespart. Dadurch ergibt sich in vorteilhafter Weise bei konkurrierenden Zugriffen mehrerer Rechner auf gemeinsame Daten eines Datenbestandes eine enorme Zeitersparnis in der Programmverarbeitung. Weiterhin wird durch eine geringere Blockierung der "Lock-File" der Durchsatz erheblich verbessert, d. h. die Wartezeit für eine Anforderung wird erheblich verringert. Ein Detailbeispiel für den Zugriff zweier Rechner auf einen Datensatz ist im Zusammenhang mit Fig. 6 beschrieben.

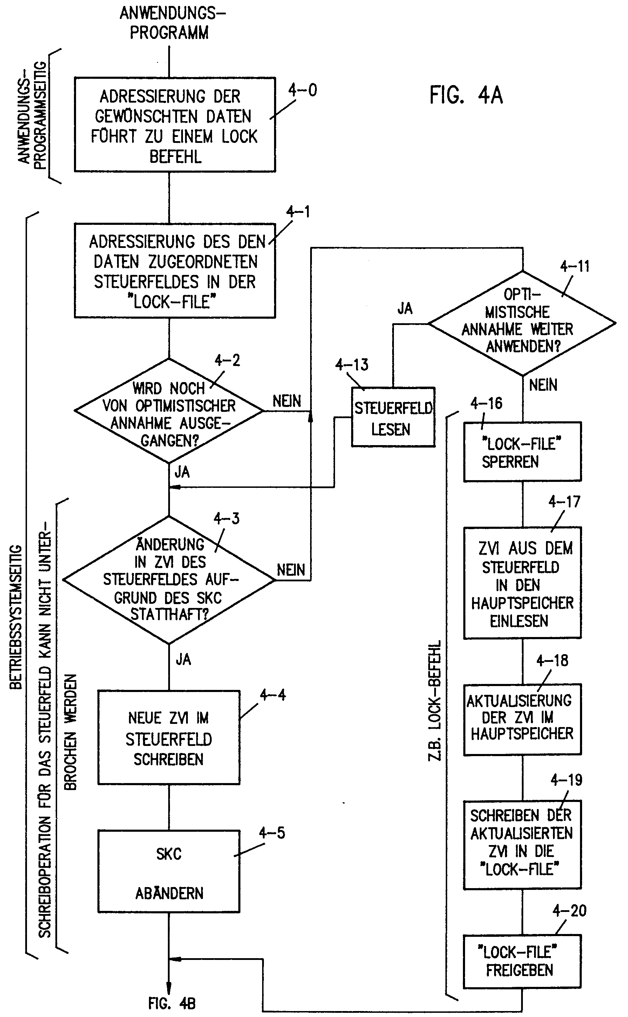

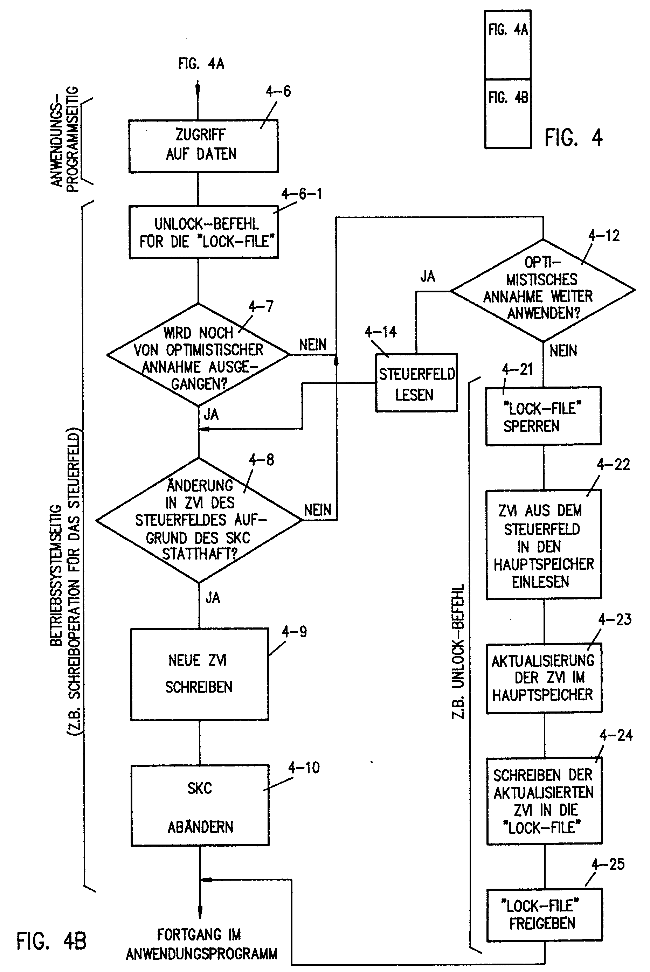

Fig. 4, 4a und 4B zeigen Funktionsablaufdiagramme zur Darstellung des nach der optimistischen Annahme arbeitenden erfindungsgemäßen Verfahrens unter Berücksichtigung der anwendungsprogramm- und betriebssystemseitig ablaufenden Vorgänge. In diesem Blockdiagramm sind auch die Ausnahmefälle berücksichtigt, die außerhalb der optimistischen Annahme liegen.

Im Blockdiagramm sind die einzelnen Funktions-Blöcke mit 4-0 bis 4-20 numeriert; es enthält Angaben, welche Schritte vom Anwendungsprogramm und welche vom Betriebssystem ausgeführt werden.

Sofern im Anwendungsprogramm eines Rechners gemeinsame Daten (z. B. ein bestimmter Kontensatz) durch Vorgabe eines Suchbegriffs (z. B. der Kontonummer) in 4-0 adressiert werden sollen (zur Durchführung einer Lese- oder Schreiboperation), führt die Adressierung der gemeinsamen (Kontensatz)-Datei anwendungsprogrammseitig zum Lock-Befehl und betriebssystemseitig in 4-1 zur Adressierung des den Daten zugeordneten Steuerfeldes in der "Lock-File". Beim Abarbeiten des Lock-Befehls wird in Schritt 4-2 entschieden, ob noch von einer optimistischen Annahme ausgegangen werden soll. Im bejahenden Fall werden in einer nicht unterbrechbaren Operation die Schritte 4-3, 4-4 und 4-5 ausgeführt. Im Schritt 4-3 wird geprüft, ob eine Änderung des Inhalts des Steuerfeldes, der Zugriffsverwaltungsinformation ZVI, aufgrund des Statuskennzeichnungscodes SKC statthaft ist. Im bejahenden Fall wird die sich aus der Adressierung der Daten (in 4-0) für eine Schreib- oder Leseoperation ergebende Verwaltungsinformation, die neue ZVI, in das Steuerfeld geschrieben. Nachfolgend, im Schritt 4-5 wird der Statuskennzeichnungscode SKC abgeändert. Die Folge der Instruktionen 4-3, 4-4 und 4-5 kann nicht unterbrochen werden; in diesem Zusammenhang wird oftmals auch von "atomaren" Schreibvorgängen gesprochen. Nach dem erfolgreichen Eintrag der neuen Informationen in die "Lock-File" wird nach dem Schritt 4-5 vom Betriebssystem wieder in das Anwendungsprogramm verzweigt, in dem im Schritt 4-6 der Zugriff auf die adressierten Daten erfolgen kann. Gibt das Anwendungsprogramm im Schritt 4-6-1 seine Zugriffsrechte mit einem Unlock-Befehl zurück, wird der Schritt 4-7 durchlaufen. Dort wird geprüft, ob weiterhin von der optimistischen Annahme ausgegangen werden soll. (Eine solche Abfrage kann dazu benutzt werden, um vergebliche Zugriffsversuche auf eine vorgegebene Anzahl zu begrenzen.) Im JA-Zweig des Schrittes 4-7 werden (analog zu 4-3, 4-4 und 4-5) in den Schritten 4-8, 4-9 und 4-10 die Zugriffsrechte zurückgenommen (der Unlock-Befehl wird vollzogen), d. h. eine neue entsprechende ZVI wird in die "Lock-File" eingetragen. Nach Ausführung des Schrittes 4-8 (Abfrage des erwarteten SKC) wird entsprechend der bejahenden Feststellung, daß eine Änderung des Steuerfeldes möglich ist, in 4-9 eine neue Zugriffsverwaltungsinformation ZVI in das Steuerfeld geschrieben und in 4-10 der Statuskennzeichnungscode entsprechend abgeändert, z. B. dahingehend, daß das Steuerfeld nun leer ist und ohne später gelesen werden zu müssen, überschrieben werden darf.

Im Anschluß daran wird vom Betriebssystem wieder in das Anwendungsprogramm verzweigt. Sollten die Abfragen in den Schritten 4-3 bzw. 4-8 verneinend beantwortet werden, erfolgt ebenso wie bei einer Verneinung der Abfrage in 4-2 bzw. 4-7 "wird noch von einer optimistischen Annahme ausgegangen?" eine Verzweigung zum Schritt 4-11 bzw. 4-12. Dort wird geprüft, ob die optimistische Annahme noch weiter anzuwenden ist. Im bejahenden Fall wird, nachdem das Steuerfeld in Schritt 4-13 bzw. 4-14 gelesen wurde, und somit der aktuelle Stand von ZVI und SKC bekannt ist, zum Schritt 4-3 bzw. 4-8 verzweigt. Im NEIN-Zweig des Schrittes 4-11 bzw. 4-12 wird die "Lock-File" gemäß dem Stand der Technik bearbeitet. Das heißt z. B. im NEIN-Zweig der Frage 4-11 (4-12) wird zunächst die "Lock-File" in 4-16 (4-21) gesperrt und danach im Schritt 4-17 (4-22) die Zugriffsvervaltungsinformation aus dem Steuerfeld in den Hauptspeicher eingelesen. (An dieser Stelle sei ausdrücklich bemerkt, daß bei der optimistischen Annahme insbesondere Schritte wie 4-16 (4-21) und 4-20 (4-25) entfallen.) Diese Schritte werden nur bei herkömmlichen (zeitintensiven) Verfahren ausgeführt. Im Schritt 4-18 (4-23) erfolgt eine Aktualisierung der Steuerfeldinformation ZVI im Hauptspeicher. Die aktualisierte Steuerfeldinformation ZVI wird im Schritt 4-19 (4-24) in das entsprechende Steuerfeld der "Lock-File" geschrieben. Anschließend wird im Schritt 4-20 (4-25) die "Lock-File" wieder freigegeben. Durch die Schritte 4-16 bis 4-20 können beispielsweise für die adressierten Daten durch einen Lock-Befehl einem Rechner Zugriffsrechte eingeräumt werden. Nach Ausführung des Schrittes 4-20 wird zum Schritt 4-6 verzweigt, in dem anwendungsprogrammseitig der Zugriff auf die adressierten Daten erfolgt.

Ein analoger Programmablauf, wie er in den Schritten 4-16 bis 4-20/4-6 erfolgt, ergibt sich auch für den NEIN-Zweig des Schrittes 4-12. In diesem Programmzweig (4-21, -22, -23, -24, -25) können z. B. vormals durch einen Lock-Befehl bewirkte Zugriffsrechte durch einen Unlock-Befehl wieder aufgehoben werden.

Das erfindungsgemäße auf der optimistischen Annahme beruhende Verfahren kann in unterschiedlichen Fällen Anwendung finden: z. B. im Rahmen einer Zugriffsverwaltung beim Zugriff mehrerer Rechner auf ihnen gemeinsame Datenbestandsätze oder im Rahmen einer Dateiverwaltung beim Zugriff mehrerer Rechner auf einen gemeinsamen Katalog.

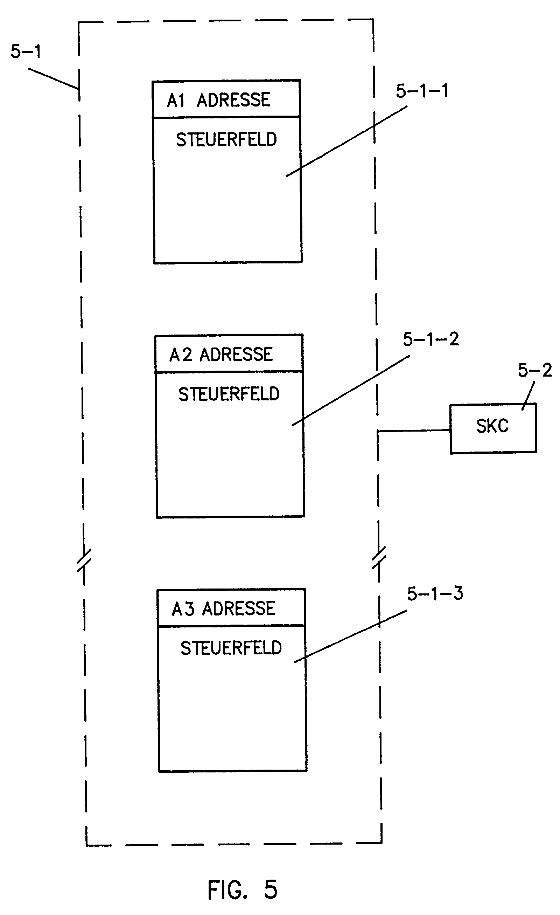

In Fig. 3 ist jedem Steuerfeld neben der wahlfreien Adresse (006, 007, 008) der Daten auch jeweils ein Statuskennzeichnungscode SKC 3-3 zugeordnet. Es sind jedoch auch Fälle (Fig. 5) denkbar, in denen nicht jedem Steuerfeld, sondern nur einer Gruppe (Block) 5-1 von Steuerfeldern (5-1-1, 5-1-2, 5-1-3) ein gruppengemeinsamer Statuskennzeichnungscode SKC (5-2) zugeordnet ist. (Die Datenadressen lauten in diesem Beispiel A1, A2 und A3.) In diesem Zusammenhang könnte z. B. bedeuten:
SKC = 0: Block leer (= alle Steuerfelder leer), d. h. eine Zugriffsberechtigung kann sofort erteilt werden.

SKC = 1: Block nicht leer (mindestens ein Steuerfeld ist nicht leer), d. h. eine Zugriffsberechtigung kann nicht ohne genauere Prüfung erteilt werden. (Seit dem letzten Zugriff auf ein Steuerfeld, bei dem SKC auf 1 gesetzt wurde, ist kein weiterer Zugriff erfolgt; andernfalls wäre SKC auf 2 gesetzt worden.)

Beispiele für die unterschiedlichen Arten von Zugriffsberechtigungen und -steuerungen könnten sinngemäß lauten: "dieser Datensatz darf nur von Rechner 3 oder 4 gelesen werden" oder "dieser Datensatz darf nur von Rechner 6 verändert werden" etc., etc.

In Fig. 6 ist in einem schematischen Zeitdiagramm gezeigt, wie zwei Rechner zu unterschiedlichen Zeitpunkten Zugriff auf einen Datensatz, adressierbar durch die Angabe "007" zur Ausführung eines Lesebefehles Zugriff nehmen sollen. Die Darstellung unterscheidet für jeden Rechner die Anwendungsprogrammseite von der Betriebssystemseite. Die unterschiedlichen Zeitpunkte, zu denen Vorgänge ablaufen bzw. eingeleitet werden, sind mit t1 bis t13 gekennzeichnet. Zum Zeitpunkt t1 wird eine Leseanforderung durch den Rechner 1 an Datensatz 007 gestellt. Dies führt zu einem Lock "007"-Befehl. Zur Gewährung der Zugriffsberechtigung für den Rechner 1 wird zum Zeitpunkt t2 geprüft, ob in der "Lock-File" der dem Steuerfeld des Datensatzes 007 zugeordnete Statuskennzeichnungscode gleich 0 ist. Bei Bejahung dieser Frage (die optimistische Annahme trifft zu) kann die Zugriffsverwaltungsinformation ZVI entsprechend der Anforderung ohne Lesevorgang im Steuerfeld vermerkt und der neue Statuskennzeichnungscode SKC auf 1 gesetzt werden.

Mit der zu Zeitpunkt t2 gewährten Zugriffsberechtigung kann zum Zeitpunkt t3 der Zugriff auf den Datensatz 007 für einen Lesevorgang erfolgen. Zum Zeitpunkt t4 möchte der Rechner 2 ebenfalls Lese-Zugriff auf den Datensatz 007 nehmen. Dies führt zu einem weiteren Lock "007"-Befehl. Zur Gewährung der Zugriffsberechtigung für Rechner 2 wird zum Zeitpunkt t5 geprüft, ob der Statuskennzeichnungscode für das Steuerfeld von 007 noch auf 0 steht. Da diese Frage zu verneinen ist (die optimistische Annahme trifft hier nicht zu, da zum Zeitpunkt t2 der Statuskennzeichnungscode bereits auf 1 gesetzt wurde) wird zum Zeitpunkt t6 die Zugriffsverwaltungsinformation ZVI des Steuerfeldes für 007 und der SKC in den Rechner 2 gelesen. Dort wird festgestellt, daß der Statuskennzeichnungscode auf 1 gesetzt ist. Aus der Zugriffsverwaltungsinformation ZVI wird gefolgert, daß zur Zeit ein anderer Rechner Zugriff auf 007 hat. Zum Zeitpunkt t7 wird unter der neuen optimistischen Annahme, daß SKC noch auf 1 steht, ein erneuter Schreibvorgang in das steuerfeld für 007 versucht. In diesem Falle trifft die optimistische Annahme zu und zum Zeitpunkt t7 wird die neue ZVI eingetragen und der Statuskennzeichnungscode auf 2 gesetzt. Zum Zeitpunkt t8 kann der Rechner 2 einen Lesezugriff auf den Datensatz 007 ausüben. Zum Zeitpunkt t9 wird durch den Rechner 2 anwendungsprogrammseitig nach beendetem Lesezugriff auf den Datensatz 007 ein Unlock "007"-Befehl gegeben. Dazu wird betriebssystemseitig unter der optimistischen Annahme, daß SKC wie zuletzt noch auf 2 steht, ein Schreibversuch in das Steuerfeld unternommen. Da die optimistische Annahme zutrifft, wird zum Zeitpunkt t10 das Zugriffsrecht für den Rechner 2 gelöscht und SKC auf 3 gesetzt. Zum Zeitpunkt t11 sollen für den Rechner 1 die zum Zeitpunkt t1 angeforderten Zugriffsrechte für 007 durch einen Unlock 007-Befehl aufgehoben werden. Eine solche Anforderung bewirkt zum Zeitpunkt t12, daß unter der optimistischen Annahme bei einem Schreibversuch geprüft wird, ob der Statuskennzeichnungscode noch auf 1 steht (zum Zeitpunkt t2 wurde der Statuskennzeichnungscode auf 1 gesetzt). Da diese Frage zu verneinen ist (die optimistische Annahme trifft nicht zu, denn SKC hat bis zum Zeitpunkt t12 noch den Wert 3), wird aus diesem Grunde die Zugriffsverwaltungsinformation des Steuerfeldes und der SKC in den Rechner 1 eingelesen, dabei wird durch Prüfung der ZVI festgestellt, daß nun die letzten Zugriffsrechte für Datensatz 007 zurückgegeben werden, und daß der Wert für SKC 3 beträgt. Zum Zeitpunkt t13 wird ein Schreibversuch für das Steuerfeld von 007 unternommen mit der neuen optimistischen Annahme, daß SKC noch auf 3 steht. Da dies zutrifft, wird ZVI im Steuerfeld auf leer gesetzt und der Statuskennzeichnungscode entsprechend auf den Wert 0 abgeändert, was gleichbedeutend damit ist, daß bei der nächsten Anforderung Zugriffsrechte ohne vorheriges Lesen der ZVI eingetragen werden können.

Dieses Beispiel zeigt die Behandlung von (seltenen) sich überschneidenden Zugriffen. Im Normalfall überschneiden sich die Zugriffe der Rechner auf den Datensatz nicht und durch das Eintreffen der optimistischen Annahme braucht das Steuerfeld erfindungsgemäß nicht gelesen zu werden.

## Patentansprüche

1. Verfahren zur Zugriffsverwaltung und -steuerung mehrerer Rechner für von ihnen wahlfrei adressierbare gemeinsame Daten, dadurch gekennzeichnet,
daß eine Steuerdatei ("Lock-File"; 3-1) vorgesehen ist mit einer Vielzahl von Steuerfeldern (3-4), welche jeweils Zugriffsverwaltungsinformation (ZVI) für die Zugriffsberechtigung der Rechner auf die Daten enthalten, wobei den Steuerfeldern neben der wahlfreien Adresse der Daten ein Statuskennzeichnungscode (SKC; 3-3) für die in dem Steuerfeld enthaltene Zugriffsverwaltungsinformation (ZVI) zugeordnet ist,
und daß bei einer Zugriffsanforderung durch einen Rechner auf Daten das diesen entsprechende Steuerfeld (unter Fortfall eines Lesevorganges für die Zugriffsverwaltungsinformation in den anfordernden Rechner) nur für einen Schreibvorgang adressiert wird, durch den bei einer aus dem Statuskennzeichnungscode (SKC) ableitbaren sofortigen Änderungsberechtigung der Zugriffsverwaltungsinformation des Steuerfeldes die Zugriffsverwaltungsinformation für den anfordernden Rechner in das Steuerfeld geschrieben und der Statuskennzeichnungscode (SKC) entsprechend dieser Änderung abgeändert wird oder durch den bei einer aus dem Statuskennzeichnungscode ableitbaren zu verneinenden Änderungsberechtigung die Zugriffsverwaltungsinformation und der Wert des Statuskennzeichnungscodes des Steuerfeldes in den anfordernden Rechner gelesen wird,
und daß das Steuerfeld erneut für einen Schreibvorgang bezüglich der Zugriffsverwaltungsinformation des anfordernden Rechners adressiert wird, der dann vollzogen wird, wenn der nach dem Lesevorgang in den Rechner bestimmte Wert des Statuskennzeichnungscodes mit dem Statuskennzeichnungscodes des Steuerfeldes übereinstimmt und daß nach vollzogenem Schreibvorgang der Statuskennzeichnungscode entsprechend abgeändert wird
oder daß bei einer aus dem Statuskennzeichnungscode (SKC) ableitbaren zu verneinenden Änderungsberechtigung die Zugriffsverwaltungsinformation des Steuerfeldes in an sich bekannter Weise nach Sperrung der Steuerdatei für andere Zugriffe in den anfordernden Rechner gelesen, mit der Rechneranforderung auf Gewährung der Zugriffsberechtigung verglichen, im bejahenden Falle aktualisiert und in das Steuerfeld zurückgeschrieben wird.

2. Verfahren nach Anspruch 1, dadurch gekennzeichnet,
daß jedem Steuerfeld ein Statuskennzeichnungscode (SKC) zugeordnet ist.

3. Verfahren nach Anspruch 1, dadurch gekennzeichnet,
daß einer Gruppe von Steuerfeldern (5-1-1, 5-1-2, 5-1-3) mit jeweils zugeordneten wahlfreien Adressen der Daten ein gruppengemeinsamer Statuskennzeichnungscode (SKC; 5-2) zugeordnet ist.
